# EUROPÄISCHE PATENTSCHRIFT

(11) **EP 2 684 783 B1**
(45) Veröffentlichungstag und Bekanntmachung des Hinweises auf die Patenterteilung: **01.06.2016**
(21) Anmeldenummer: 13175836.9
(22) Anmeldetag: 10.07.2013
(51) Int. Cl.: B62J 6/02

(54) **Multifunktionsscheinwerfer mit Funktionsanschlusskabel**
Multi-function headlamp with function connection cable
Phare multifonction avec câble de raccordement de fonction

(30) Priorität: 13.07.2012 DE 102012106323
(43) Veröffentlichungstag der Anmeldung: 15.01.2014
(73) Patentinhaber: Busch & Müller KG, 58540 Meinerzhagen (DE)
(72) Erfinder:
(74) Vertreter: Heine, Christian Klaus

(56) Entgegenhaltungen:
- EP-A1- 1 918 185
- DE-A1-102009 002 696
- DE-A1-102011 012 936
- DE-U1-202010 000 522
- DE-U1-202011 050 233

## Beschreibung

Die vorliegende Erfindung betrifft einen Scheinwerfer für ein Fahrrad mit oder ohne unterstützenden elektrischen Antrieb. Fahrräder weisen häufig, auch falls sie mit einem elektrischen Antrieb und einem zugehörigen leistungsstarken Akkumulator ausgerüstet sind, ein von diesem elektrischen Antrieb unabhängiges Beleuchtungssystem mit einem Dynamo, einem Frontscheinwerfer und einem Rücklicht auf. Die vorliegende Erfindung betrifft einen Scheinwerfer für ein solches Beleuchtungssystem.

Während zu Zeiten der Benutzung von Glühbirnen in Fahrradbeleuchtungen die notwendige elektrische Leistung eines Dynamos nur gerade für deren Betrieb ausreichte, haben sich durch den Einsatz von Leuchtdioden umfangreiche Möglichkeiten zur Verbesserung von Fahrradbeleuchtungseinrichtungen ergeben. Ein typischer Fahrraddynamo, insbesondere ein ständig mitlaufender Nabendynamo, kann weit mehr elektrische Energie erzeugen als zum Betrieb eine Frontscheinwerfers und eines Rücklichtes erforderlich ist. Dies wurde bereits in vielfältiger Weise zur Erhöhung der Sicherheit und der Sicht von Fahrradfahrern ausgenutzt. Moderne Hochleistungs-Leuchtdioden erlauben eine helle Ausleuchtung eines großen Sichtfelds, wobei außerdem Standlichtfunktionen, Tagfahrlicht und Variationen der Beleuchtung nach Bedarf verwirklicht wurden. Bekannt ist die Offenbarung EP 1 918 185 A1, Oberbegriff der Ansprüche 1 und 15. Obwohl solche typischen Anwendungen für viele Arten des Gebrauchs von Fahrrädern ausreichen, gibt es doch zusätzliche Möglichkeiten, den Komfort, die Sicherheit und die Nutzung weiterer Funktionen für Fahrradfahrer auszubauen. Insbesondere kann der Wunsch bestehen, bei längeren Fahrradfahrten mit oder ohne Unterstützung eines elektrischen Antriebs den Akkumulator eines Mobiltelefons aufzuladen oder ein Navigationsgerät extern mit Strom zu versorgen. Auch können Situationen auftreten, in denen eine besonders helle Beleuchtung, z. B. als Funktion einer Lichthupe, oder zum Ausleuchten von Kurven bzw. zum besseren Erkennen von Unebenheiten bei langsamer Fahrt benötigt wird.

Der vorliegenden Erfindung liegt daher die Aufgabe zugrunde, einen Multifunktionsscheinwerfer zu schaffen, der besondere Funktionen für solche Bedürfnisse bereitstellt und eine komfortable Bedienung sowie übersichtliche Kontrolle seiner Funktionen zulässt.

Zur Lösung dieser Aufgabe dienen ein Scheinwerfer nach dem Anspruch 1 und ein zugehöriges Funktionsanschlusskabel gemäß Anspruch 10 sowie ein Verfahren zum Betrieb eines solchen Scheinwerfers nach Anspruch 12. Vorteilhafte Ausgestaltungen, die einzeln oder in Kombination miteinander bereitgestellt werden können, sind in den jeweils abhängigen Ansprüchen beschrieben.

Ein erfindungsgemäßer Scheinwerfer für ein Fahrrad, insbesondere ein Fahrrad mit einem zusätzlichen elektrischen Antrieb, weist einen mit einem Dynamo elektrisch verbindbaren Scheinwerfer und folgende Bauteile als Grundausstattung auf:
- ein Gehäuse mit mindestens einer Lichtaustrittsöffnung,
- eine Mehrzahl von Leuchtdioden,
- einen in das Gehäuse integrierten Pufferakkumulator,
- mindestens eine elektronische Steuerung zur manuellen und/oder automatischen situationsgerechten Ansteuerung der Leuchtdioden und
- mindestens eine mehrpolige Verbindung von der elektronischen Steuerung nach außen.

Zusätzlich zu dieser Grundausstattung weist der Scheinwerfer eines, mehrere oder alle der folgenden Merkmale auf:
- der Pufferakkumulator ist für eine Spannung von mindestens 5,5 V ausgelegt und hat eine Kapazität von mindestens 30 mA/h,
- es sind mindestens drei Leuchtdioden vorhanden, die in mindestens zwei Gruppen separat geschaltet sind, wobei eine Gruppe als Tagfahrlicht und mindestens eine als Hauplicht schaltbar ist,
- die mehrpolige Verbindung ist als Anschlussbuchse ausgebildet und so mit dem Pufferakkumulator verbunden, dass eine konstante Spannung für einen Stromversorgungsausgang an der Anschlussbuchse abgenommen werden kann,
- die mehrpolige Verbindung ist so mit der elektronischen Steuerung verbunden, dass verschiedene Funktionen der Leuchtdioden über ein angeschlossenes Funktionsanschlusskabel mit Schaltelement angesteuert werden können,
- es ist mindestens ein manuell bedienbarer Schalter am Gehäuse vorhanden, der zumindest ein Ein- und Ausschalten des Scheinwerfers ermöglicht, wenn kein Schaltelement an die mehrpolige Verbindung angeschlossen ist.

Ein wichtiger Grundgedanke der vorliegenden Erfindung besteht darin, in den Scheinwerfer einen Pufferakkumulator zu integrieren, der einerseits für einen Zeitraum von einigen Minuten sämtliche Funktionen der Beleuchtung auf Wunsch aufrecht erhalten kann und der andererseits eine konstante Spannung für einen Stromversorgungsausgang, insbesondere nach dem USB-Standard, liefern kann. Um diese Doppelfunktion erfüllen zu können, ist der Pufferakkumulator bevorzugt mit einer elektronischen Steuerung verbunden, die seine elektrische Leistung je nach Ladezustand und Anforderung eines Benutzers auf die Beleuchtungseinrichtungen des Fahrrads und den Stromversorgungsausgang verteilt. Der Pufferakkumulator wird bei normaler Fahrt von einem ständig angeschlossenen Dynamo aufgeladen, selbst dann, wenn typische Beleuchtungsfunktionen gleichzeitig benutzt werden, beispielsweise Tagfahrlicht oder ein typisches, gesetzlich vorgeschriebenes Beleuchtungsbild bei einer Nachtfahrt. Die in dem Pufferakkumulator gespeicherte Energie steht dann jederzeit für zusätzliche Funktionen zur Verfügung, sei es zum Aufladen oder Betreiben eines Mobiltelefons oder Navigationsgeräts oder sei es zur Verwirklichung von Zusatzfunktionen wie Standlicht, Kurvenlicht, Flutlicht oder Lichthupe.

Um die Bedienung des Multifunktionsscheinwerfers komfortabel zu machen, weist dieser eine mehrpolige Verbindung, bevorzugt in Form einer Anschlussbuchse auf, an der ein Funktionsanschlusskabel angeschlossen werden kann, welches vorzugsweise zum Lenker des Zweirads geführt werden kann, wo es in einer Halterung endet. Diese Halterung kann ein oder mehrere Schaltelemente zur Bedienung des Scheinwerfers aufweisen und/oder eine Stromversorgungsbuchse, insbesondere eine USB-Buchse. Die im Folgenden anhand einer Buchse und eines entsprechenden Steckers beschriebene mehrpolige Verbindung kann auch als durch das Gehäuse nach außen geführtes Kabel ausgebildet sein, welches direkt an die elektronische Steuerung angeschlossen ist.

Grundsätzlich ist es bekannt, moderne Frontscheinwerfer für Fahrräder mit gewissen automatischen Funktionen auszustatten, so dass diese mit einem Schalter an ihrem Gehäuse bedient werden können. Dabei sind typischerweise Funktionen wie AUS ("0"), TAG ("T"), NACHT ("N") und/oder SENSORAUTOMATIK ("S") bekannt, wobei die Einstellung "S" beispielsweise auf typische Fahrsituationen automatisch reagiert und dabei je nach Umgebungshelligkeit und Geschwindigkeit des Fahrrads, gemessen anhand der Wechselstromfrequenz des Dynamos, zwischen Tagfahrlicht, Nachtfahrlicht und Standlicht automatisch wechselt. Zur Verwirklichung dieser Funktionen reicht es im Allgemeinen aus, als Puffer-Speicher für elektrische Energie einen Kondensator mit geeigneter Kapazität vorzusehen. Die erfindungsgemäße Anwendung eines Pufferakkumulators, insbesondere eines LiFePo4-Akkumulators, erlaubt eine wesentliche Erweiterung der verfügbaren Funktionen, nämlich in erster Linie die Bereitstellung einer Stromversorgung aus dem Scheinwerfer heraus. Dies wird durch eine mehrpolige Anschlussbuchse erreicht, an die mittels eines mehrpoligen Steckers, insbesondere eines Klinkensteckers, ein Funktionsanschlusskabel bei Bedarf oder auch ständig angeschlossen werden kann. Dieses Funktionsanschlusskabel kann prinzipiell an jede Stelle eines Fahrrads geführt werden, kann jedoch viele Funktionen am besten erfüllen, wenn es zum Fahrradlenker, insbesondere in den Griffbereich des Fahrers, geführt wird. In diesem Falle kann am Ende des Funktionsanschlusskabels nicht nur eine Stromversorgungsbuchse vorgesehen werden, sondern es können Signalleuchten, die den Zustand der Stromversorgungsbuchse und/oder der Beleuchtungseinrichtung an den Fahrer signalisieren, untergebracht werden. Außerdem können ein oder mehrere Schaltelemente, beispielsweise elektrische Tastschalter, vorgesehen werden, mit denen zwischen verschiedenen Funktionen der Beleuchtungseinrichtung umgeschaltet werden kann. Auf diese Weise kann der erfindungsgemäße Scheinwerfer mit oder ohne Funktionsanschlusskabel betrieben werden, wobei er manuell oder automatisch geschaltete Grundfunktionen ohne Funktionsanschlusskabel erfüllt, während zusätzliche Funktionen mit Hilfe des Funktionsanschlusskabels verwirklicht werden. Die Verwendung einer an sich bekannten Mehrzahl von Leuchtdioden erlaubt es, diese in zwei oder mehr Gruppen separat zu schalten, wobei eine Gruppe als Tagfahrlicht und mindestens eine als Hauptlicht schaltbar ist. Weitere Funktionen, wie Standlicht oder Kurvenlicht, können durch weitere Gruppen, eine andere Zusammenschaltung und/oder eine andere Helligkeit der einzelnen Gruppen verwirklicht werden.

In einer bevorzugten Ausführungsform der Erfindung weist der Scheinwerfer einen Rücklichtanschluss auf, dessen Stromverbrauch gemessen wird, wobei der Verbrauch in einem vorgegebenen Bereich eine erste Kontrollleuchte, vorzugsweise eine Leuchtdiode am Scheinwerfer ansteuert. Diese Art des Anschlusses eines Rücklichts erhöht die Sicherheit, weil der Fahrer des Fahrrads jederzeit feststellen kann, ob das Rücklicht ordnungsgemäß funktioniert. Bei Kurzschluss fließt ein hoher Strom, bei einer unterbrochenen Leitung oder defektem Rücklicht fließt kein Strom, beides Zustände, die relativ leicht von einem korrekten Betrieb unterscheidbar sind. Die elektronische Steuerung verteilt und misst die den einzelnen Leuchtdioden und dem Rücklicht zugeführten Ströme und steuert eine Kontrollleuchte im Gehäuse des Scheinwerfers an, wenn das Rücklicht ordnungsgemäß funktioniert. Eine zweite und weitere Kontrollleuchten können für andere Funktionen vorgesehen werden.

In einem weiteren bevorzugten Ausführungsbeispiel weist der Scheinwerfer mindestens einen Helligkeitssensor auf, der je nach Umgebungshelligkeit verschiedene Leuchtdioden oder Gruppen von Leuchtdioden über die elektronische Ansteuerung ansteuert und/oder deren Helligkeit entsprechend der Umgebungshelligkeit anpasst. Diese an sich bekannte Funktion erlaubt einen automatischen Betrieb des Scheinwerfers ohne jeden Eingriff des Fahrers.

Bei einer weiteren Ausführungsform ist mindestens eine der Leuchtdioden oder eine der Gruppen von Leuchtdioden des Scheinwerfers als Standlicht schaltbar, wenn keine Stromversorgung durch einen Dynamo erfolgt. Durch die Verwendung eines leistungsstarken Pufferakkumulators ist es dabei auch möglich, bei Fahrtunterbrechungen bis zu einer bestimmten Länge, beispielsweise 1 bis 5 Minuten, die komplette Beleuchtung aufrecht zu erhalten, oder auf eine besondere Standlichtkonfiguration umzuschalten.

In einem besonderen Ausführungsbeispiel der Erfindung ist mindestens eine der Leuchtdioden oder Gruppen von Leuchtdioden des Scheinwerfers in zwei unterschiedlichen Helligkeitsstufen betreibbar, zwischen denen mittels eines an die Anschlussbuchse anschließbaren Schaltelements umgeschaltet werden kann. Diese Ausführungsform ermöglicht beispielsweise die Funktion einer Lichthupe, bei der kurzzeitig viele oder alle Leuchtdioden mit maximaler Stromstärke betrieben werden, um ein helles, warnendes Lichtsignal auszusenden. Auch eine sogenannte "Booster"Funktion, auch als Flutlicht zu bezeichnen, kann verwirklicht werden, beispielsweise für besonders unebene Wegstücke bei Nacht, bei denen eine zusätzliche Ausleuchtung mit maximaler Lichtstärke gewünscht wird.

In einer weiteren bevorzugten Ausgestaltung weist der Scheinwerfer mindestens eine Leuchtdiode auf, die durch geeignete Anordnung oder optische Mittel als seitlicher Kurvenstrahler ausgebildet ist, die manuell oder automatisch zu einem Hauptlicht zuschaltbar ist. Bevorzugt wird die Verwendung von mindestens zwei solchen zusammengeschalteten Dioden, um ein symmetrisches Kurvenlicht zu erhalten. Dies erlaubt, ähnlich wie bei Nebelscheinwerfern an Kraftfahrzeugen, eine breite Ausleuchtung der Umgebung im Nahbereich, was insbesondere bei Kurven oder in schwierigem Gelände bei langsamer Fahrt von Vorteil ist.

Bevorzugt weist die mehrpolige Verbindung eine Anschlussbuchse am Scheinwerfer auf, insbesondere eine in dem Gehäuse angeordnete Klinkensteckerbuchse, insbesondere für einen vierfach Stereoklinkenstecker, bei dem zwei Pole für eine Stromversorgungsleitung, insbesondere eine Standard-USB-Stromversorgung, und weitere Pole für eine oder mehrere Datenleitungen bzw. Signalleitungen mit der elektronischen Steuerung verbunden sind. Auf diese Weise kann ein Funktionsanschlusskabel mit einem entsprechenden Klinkenstecker angeschlossen werden, welches einerseits einen genügend starken Strom für die Versorgung oder Aufladung von Zusatzgeräten über die Stromversorgungsleitungen erhalten kann und andererseits Daten oder Signale in weiteren Leitungen übermitteln kann.

In einer besonderen Ausführungsform weist der Scheinwerfer außen am Gehäuse einen manuell bedienbaren Schalter auf, der einen mit dem Schalter bewegbaren Permanentmagneten enthält, der je nach seiner Position unterschiedlich auf mindestens einen mit der elektronischen Steuerung verbunden Magnetsensor einwirkt. Diese Ausgestaltung erlaubt ein manuelles Bedienen bzw. Beeinflussen der elektronischen Steuerung, ohne dass Kabel durch das Gehäuse des Scheinwerfers geführt werden müssen. Dort lassen sich Funktionen wie "0", "N", "T" oder "S" einstellen.

Bei modernen Scheinwerfern mit automatischen Funktionen und verschiedenen Zusatzfunktionen ist die elektronische Steuerung meist ein Mikroprozessor, dessen Funktionen von einem Computerprogramm gesteuert werden. Es ist daher auch möglich, eine Stromversorgungsbuchse, z. B. nach dem USB-Standard, auch zur Datenübertragung zu verwenden, beispielsweise um ein gespeichertes Programm in dem Scheinwerfer zu verändern oder zu ersetzen. Ebenfalls möglich ist es, die Stromversorgungsbuchse auch in umgekehrter Richtung zu betreiben, nämlich eine Stromquelle anzuschließen, die ihrerseits den Pufferakkumulator aufladen und/oder die Beleuchtung mit Strom versorgen kann. Dazu kann erfindungsgemäß die elektronische Schaltung so ausgeführt ist, dass das Anliegen einer externen Stromquelle an der mehrpoligen Verbindung erkannt wird und eine Umschaltung auf externe Stromversorgung erfolgt.

Zur vollständigen Ausnutzung der Möglichkeiten des erfindungsgemäßen Scheinwerfers dient ein Funktionsanschlusskabel, welches an einem Ende einen an eine Anschlussbuchse des Scheinwerfers angepassten mehrpoligen Stecker und am anderen Ende eine Halterung aufweist, insbesondere zur Befestigung an einem Fahrradlenker, wobei die Halterung mindestens eine Stromversorgungsbuchse, insbesondere nach USB-Standard, und mindestens ein Schaltelement zum Schalten von Funktionen der elektronischen Steuerung aufweist. Mittels dieses Funktionsanschlusskabels können zusätzliche Funktionen des erfindungsgemäßen Scheinwerfers komfortabel von einem Zweiradfahrer genutzt werden, insbesondere kann ein Navigationsgerät oder ein Mobiltelefon im Lenkerbereich angeschlossen werden und es können bei Bedarf Zusatzfunktionen der Beleuchtung, beispielsweise Lichthupe, Kurvenlicht oder Flutlicht, angesteuert werden.

Besonders günstig ist es, wenn die Halterung zusätzlich mindestens eine Signalleuchte, vorzugsweise eine Leuchtdiode, aufweist, welche bestimmte Signale für den Fahrer liefert, insbesondere zum Anzeigen der Ladebereitschaft der Stromversorgungsbuchse oder bestimmter Leuchtzustände des Scheinwerfers. Da die der Sicherheit dienenden Funktionen der Fahrzeugbeleuchtung vorrangig aufrecht erhalten werden müssen, kann es vorkommen, dass der Pufferakkumulator aufgrund einer vorherigen intensiven Benutzung der Beleuchtung stark entladen ist und daher die Stromversorgungsbuchse nicht mit Strom versorgt werden kann. Dies kann anhand einer entsprechenden Signalleuchte sofort erkannt werden.

Ein erfindungsgemäßes Verfahren zum Betrieb eines Scheinwerfers eines Zweirads, welches im Folgenden anhand von Einzelheiten noch näher erläutert wird, zeichnet sich dadurch aus, dass verschiedene Leuchtzustände des Scheinwerfers automatisch in Abhängigkeit von Umgebungshelligkeit, Geschwindigkeit des Zweirads, Ladezustand des Pufferakkumulators und/oder anderen Parametern eingestellt werden, wobei Eingriffe über einen manuell bedienbaren Schalter am Gehäuse und über ein Schaltelement an einem Funktionsanschlusskabel vorrangig geschaltet werden und parallel ein Ladestrom oder ein Versorgungsstrom für ein elektrisches Zusatzgerät, insbesondere ein Smartphone oder ein Navigationsgerät, abzweigbar sind.

Die Grundfunktionen eines Ausführungsbeispiels eines erfindungsgemäßen Multifunktionsscheinwerfers lassen sich beispielhaft wie folgt beschreiben.

Bei einer Schalterstellung des manuell bedienbaren Schalters auf "0" sind alle Leuchtdioden, als z. B. das Tagfahrlicht, die seitlichen Kurvenstrahler, das Hauptlicht, das Rücklicht und seine Kontrollleuchte ausgeschaltet. Der Stromversorgungsausgang bleibt eingeschaltet, solange die Spannung des Pufferakkumulators größer als 5,5 V ist. Dieser Pufferakkumulator sollte eine Nennspannung von etwa 6,4 V und eine Kapazität von 50-200 mAh aufweisen, vorzugsweise etwa 100 mAh. Sofern keine Geräte an den Stromversorgungsausgang angeschlossen sind, sollte der Stromverbrauch durch die elektronische Steuerung nur einen Strom von bis zu 15 µA aus dem Pufferakkumulator entnehmen, was zur Prüfung des ordnungsgemäßen Zustandes verwendet werden kann. Wird in diesem Zustand das Fahrrad gefahren, so wird der Pufferakkumulator bis zu einer Spannung von 7,5 V geladen. Ein ggf. vorhandenes Funktionsanschlusskabel mit Schaltelement behält seine Funktion, so dass ggf. im Stillstand durch Bedienen des Schaltelements die Leuchtdioden mit maximalem Strom, beispielsweise 200 bis 400 mA für 2 Sekunden, versorgt werden können, was einer Lichthupenfunktion entspricht.

Der manuell bedienbare Schalter kann auch eine Einstellung "T" für Tagfahrlicht haben. In diesem Falle wird z. B. eine erste Leuchtdiode als Hauptlicht während der Fahrt mit einer vorgebbaren Sollstromstärke versorgt, wobei gleichzeitig der Pufferakkumulator mit etwa einem Sollladestrom geladen werden kann. Eine als Tagfahrlicht geschaltete Gruppe von Leuchtdioden kann mit zusätzlich vom Dynamo verfügbarem Strom bis zu einer Stromstärke von z. B. 50 bis 300 mA gespeist werden. Falls der Dynamo noch mehr Strom erzeugt, kann eine weitere Gruppe von Leuchtdioden, die beispielsweise als Kurvenstrahler ausgestaltet sind, ebenfalls bis zu einer maximalen Stromstärke zugeschaltet werden. Falls weitere Energie zur Verfügung steht, beispielsweise weil der Pufferakkumulator bereits vollständig geladen ist, so kann dieser die Helligkeit der ersten Leuchtdiode als Hauptlicht weiter erhöhen. Die elektronische Steuerung bewirkt, dass mittels eines geeigneten Programms eine sicherheitsgerichtete und für einen Benutzer optimale Verteilung des verfügbaren Stroms aus dem Dynamo erfolgt. Dadurch wird maximale Sichtbarkeit des Fahrrades bei Tag erreicht. Ggf. können hier an unterschiedliche Wünsche oder Vorschriften angepasste Programme eingesetzt werden. Wegen einer Erhöhung der Sicherheit wird bevorzugt ein Tagfahrlicht schon bei niedrigen Geschwindigkeiten eingeschaltet, bevor der Pufferakkumulator geladen wird. Ein Beispiel für eine Vorrangschaltung bei Benutzung des Stromversorgungsausgangs kann wie folgt aussehen: Wird am Stromversorgungsausgang viel Strom gezogen, so wird zunächst die Stromversorgung der Kurvenstrahler bis auf 0 gesenkt, dann das Hauptlicht bis auf einen vorgebbaren Strom reduziert und erst dann der Strom bei dem Tagfahrlicht gesenkt, allerdings nicht unter eine Mindestschwelle. Sollte dabei der Akku unter ca. 5,5 V entladen werden, wird der Stromversorgungsausgang abgeschaltet und erst wieder aktiviert, wenn der Pufferakkumulator auf eine für die Stromversorgung geeignete Spannung geladen ist.

Der manuell bedienbare Schalter kann eine weitere Schalterstellung "N" für eine vorschriftsmäßige Beleuchtung bei Dunkelheit vorsehen und eine Schalterstellung "S" für die automatische, sensorgesteuerte Nutzung aller Funktionen. In dieser Schalterstellung "S" sind bei Tageshelligkeit alle Funktionen wie oben unter Schalterstellung T beschrieben. Bei Dunkelheit und Geschwindigkeiten über z. B. 20 km/h werden die Tagfahrlichtleuchtdioden und die Kurvenstrahler-Leuchtdioden mit jeweils vorgebbaren Strömen beaufschlagt. Der Pufferakkumulator wird mit einem Sollstrom bis zu einer Maximalspannung geladen, der restliche Strom des Dynamos der Hauptlicht-Leuchtdiode zugeführt. Ab 20 km/h werden bei sinkender Geschwindigkeit die Kurvenstrahler nach einer umgekehrt von der Geschwindigkeit abhängigen Rampe heller geschaltet.

Bei allen Schaltzuständen des manuell bedienbaren Schalters bleiben die Funktionen des Schaltelementes erhalten, wobei dieses bevorzugt so mit der elektronischen Schaltung verbunden ist, dass verschiedene Tastsignale, beispielsweise abhängig von der Häufigkeit und/oder Länge des Tastendruckes und/oder abhängig vom Ausgangszustand bei Betätigung für verschiedene Funktionen benutzt werden können. Ach zwei oder mehr Schalter am Schaltelement für verschiedene Funktionen sind möglich.

Ein Ausführungsbeispiel der Erfindung wird im Folgenden anhand einer schematischen Zeichnung näher erläutert, wobei die Erfindung jedoch nicht auf die in der Zeichnung enthaltenen Einzelheiten beschränkt ist.

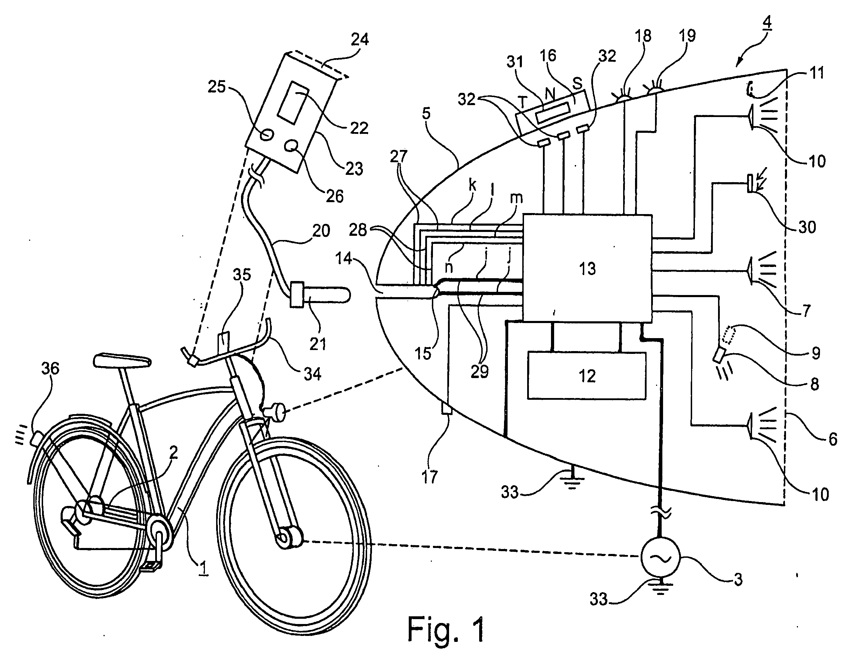

Fig. 1 zeigt schematisch den Aufbau eines erfindungsgemäßen Scheinwerfers im Längsschnitt mit Funktionsanschlusskabel und deren Anwendung beim Betrieb eines Fahrrades. Das Fahrrad 1, welches insbesondere auch einen elektrischen Antrieb 2 aufweist, hat als Beleuchtungseinrichtung einen Dynamo 3, einen Scheinwerfer 4 und ein Rücklicht 36. Außerdem weist es einen Fahrradlenker 34 auf, an dem ein elektrisches Zusatzgerät 35, beispielsweise ein Navigationsgerät, befestigt werden kann. Der Dynamo 3 ist typischerweise in der Nabe des Vorderrads angeordnet und läuft ständig mit. Der in der Zeichnung nur mit seinem schematischen Aufbau dargestellte Scheinwerfer 4 weist ein Gehäuse 5 und eine Lichtaustrittsöffnung 6 auf. Im Inneren des Gehäuses 5 sind hinter der Lichtaustrittsöffnung mehrere Leuchtdioden angeordnet, nämlich eine erste Leuchtdiode 7 als Hauptlicht, eine zweite Leuchtdiode 8 und eine dritte Leuchtdiode 9 als seitliche Kurvenstrahler und mindestens eine vierte Leuchtdiode 10 und eine fünfte Leuchtdiode 11 als Tagfahrlicht. Das Tagfahrlicht kann auch durch mehr Leuchtdioden, insbesondere auch farbige, vorzugsweise blau leuchtende, gebildet werden. In der schematischen Zeichnung, die den Aufbau des Scheinwerfers 4 in einer Art Längsschnitt zeigt, sind in Fahrtrichtung nebeneinander angeordnete Leuchtdioden in dieser Darstellung verdeckt. Um deren Position dennoch anzudeuten, sind solche an sich verdeckten Leuchtdioden gestrichelt angedeutet, so die dritte Leuchtdiode 9 und die fünfte Leuchtdiode 11. Der Scheinwerfer 4 kann ebenso wie der Dynamo 3 über einen Masseanschluss 33 mit dem Rahmen des Fahrrads 1 verbunden sein. Eine elektronische Steuerung 13, typischerweise mit einem Mikroprozessor und zusätzlichen Elementen auf einer Schaltplatine angeordnet, wird von dem Dynamo 3 über elektrische Zuleitungen mit elektrischem Strom versorgt. Dies kann über zwei Leitungen oder bei Ausnutzung der Masseanschlüsse 33 mittels einer Zuleitung erfolgen. Die elektronische Steuerung 13 ist außerdem mit einem Pufferakkumulator 12 verbunden und steuert dessen Aufladung bzw. die Entnahme von elektrischem Strom aus dem Pufferakkumulator 12. Die elektrische Steuerung 13 ist auch mit allen Leuchtdioden 7, 8, 9, 10, 11 verbunden und steuert deren Versorgungsströme. Dabei können zwei oder mehr Leuchtdioden zu einer Gruppe zusammengeschaltet sein, die nur gemeinsam angesteuert wird. So können z. B. die zweiten Leuchtdiode 8 und die dritte Leuchtdiode 9 eine Gruppe bilden und als seitliche Kurvenstrahler eingesetzt werden. Ebenso können die vierte Leuchtdiode 10 und die fünfte Leuchtdiode 11 als Gruppe das Tagfahrlicht unterstützen.

Die elektronische Steuerung 13 weist auch einen Rücklichtanschluss 17 auf, der zur Außenseite des Gehäuses 5 geführt ist. An diesen Rücklichtanschluss 17 kann ein Rücklicht angeschlossen werden, wobei dessen Funktion von der elektronischen Steuerung 13 überwacht wird. Wenn der Stromverbrauch des Rücklichts in einem vorgegebenen, als ordnungsgemäß definierten Bereich liegt, steuert die elektronische Steuerung 12 eine erste Kontrollleuchte 18, vorzugsweise eine grüne Leuchtdiode, an der Außenseite des Gehäuses 5 an, so dass ein Fahrer des Fahrrads die korrekte Funktion des Rücklichts 36 jederzeit erkennen kann. Eine zweite Kontrollleuchte 19 oder weitere Kontrollleuchten für andere Funktionen können an der Oberseite des Gehäuses 5 vorgesehen werden.

Außerdem ist außen am Gehäuse 5 ein manuell bedienbarer Schalter 16 vorhanden, der vorzugsweise über einen Permanentmagneten 31 mindestens einen Magnetsensor 32 im Inneren des Gehäuses schaltet, so dass von außen mittels des manuell bedienbaren Schalters 16 unterschiedliche Grundzustände "T", "N" oder "S" eingestellt werden können.

Weiterhin ist ein Helligkeitssensor 30 vorhanden, der die Umgebungshelligkeit misst und bei der automatischen Grundeinstellung "S" die UmSchaltung zwischen Tag- und Nachtbetrieb ermöglicht. In der elektronischen Steuerung 13 ist auch eine nicht weiter dargestellte Einrichtung zur Ermittlung der Geschwindigkeit, ggf. auch der Beschleunigung des Fahrrades vorhanden, die aus der Frequenz oder der Frequenzänderung des vom Dynamo gelieferten Wechselstromes die Geschwindigkeit bzw. Beschleunigung des Fahrrades berechnet, so dass diese für die Steuerung zur Verfügung stehen.

Als besondere Zusatzausrüstung weist der Scheinwerfer 4 eine mehrpolige Anschlussbuchse 14 auf, vorzugsweise in Form einer Vierfachstereobuchse für Klinkenstecker, zu dem mehrere Adern i, j, k, l, m, n von der elektronischen Steuerung 13 hinführen. Zwei der Adern i, j, die etwas dicker dargestellt sind, dienen als Stromversorgungsleitung 29, weitere Adern k, l als Datenleitung 27 oder im Falle der Adern m, n als Signalleitung 28. Die Stromversorgungsleitung 29 soll dafür sorgen, dass an einem Stromversorgungsausgang 15 der mehrpoligen Anschlussbuchse 14 bei möglichst vielen Betriebszuständen eine konstante Spannung zur Versorgung eines elektrischen Zusatzgeräts 35 anliegt. Typischerweise handelt es sich um eine Spannung im Bereich von 5 V, wie sie bei Standard-USB-Stromversorgungen Anwendung findet. Mittels eines Funktionsanschlusskabels 20, an dessen einem Ende ein mehrpoliger Stecker, vorzugsweise in Form eines Klinkensteckers 21, angeordnet ist, können Stromversorgungsleitung 29, Datenleitung 27 und Signalleitung 28 aus der mehrpoligen Anschlussbuchse 14 herausgeführt werden. Bevorzugt führt das Funktionsanschlusskabel 20 zu einer Halterung 23 am Fahrradlenker 34, wobei in der Halterung 23 mindestens eine Stromversorgungsbuchse 24, vorzugsweise in Form einer Standard-USB-Buchse vorhanden ist. Außerdem weist die Halterung 23 eine erste Signalleuchte 25 auf, die die Versorgungsbereitschaft der Stromversorgungsbuchse 24 anzeigt. Eine zweite Signalleuchte 26 zur Signalisierung anderer Funktionen der Beleuchtungseinrichtung sowie ggf. weitere Signalleuchten können vorgesehen werden. Ein Schaltelement 22, im einfachsten Falle ein Tastschalter, kann über die Datenleitung 27 Tastimpulse zur elektronischen Steuerung 13 senden und damit bestimmte Funktionen auslösen. Auf diese Weise lassen sich komfortabel vom Fahrer des Fahrrads Funktionen wie Lichthupe, Kurvenbeleuchtung oder eine zeitweise Verstärkung der Gesamtbeleuchtung ein- und ausschalten.

Insgesamt erhöht die vorliegende Erfindung die Sicherheit und den Komfort eines Fahrradfahrers, insbesondere bei längeren Fahrten, wenn ein elektrisches Zusatzgerät, insbesondere ein Mobiltelefon oder ein Navigationsgerät über längere Zeiträume benutzt und/oder aufgeladen werden sollen. Eine automatische Steuerung aller Beleuchtungsfunktionen mit verschiedenen Grundeinstellungen und Eingriffsmöglichkeiten des Fahrers vom Fahrradlenker aus stellen dauernde optimale Sichtbarkeit und wunschgemäße Bereitstellung von Sonderfunktionen bereit, ohne dass der Fahrer sich zu einem Schalter am Scheinwerfer vorbeugen muss.

### Bezugszeichenliste

- 1: Fahrrad
- 2: Elektrischer Antrieb
- 3: Dynamo
- 4: Scheinwerfer
- 5: Gehäuse
- 6: Lichtaustrittsöffnung
- 7: Erste Leuchtdiode (Hauptlicht)
- 8: Zweite Leuchtdiode (seitlicher Kurvenstrahler)
- 9: Dritte Leuchtdiode (seitlicher Kurvenstrahler)
- 10: Vierte Leuchtdiode (Tagfahrlicht)
- 11: Fünfte Leuchtdiode (Tagfahrlicht)
- 12: Pufferakkumulator
- 13: Elektronische Steuerung
- 14: Mehrpolige Anschlussbuchse
- 15: Stromversorgungsausgang
- 16: Manuell bedienbarer Schalter
- 17: Rücklichtanschluss
- 18: Erste Kontrollleuchte
- 19: Zweite Kontrollleuchte
- 20: Funktionsanschlusskabel
- 21: Mehrpoliger Stecker (Klinkenstecker)
- 22: Schaltelement
- 23: Halterung
- 24: Stromversorgungsbuchse (USB-Buchse)
- 25: Erste Signalleuchte
- 26: Zweite Signalleuchte
- 27: Datenleitung (k, l)
- 28: Signalleitung (m, n)
- 29: Stromversorgungsleitung
- 30: Helligkeitssensor
- 31: Permanentmagnet
- 32: Magnetsensor
- 33: Masseanschluss
- 34: Fahrradlenker
- 35: Elektrisches Zusatzgerät
- 36: Rücklicht

i, j, k, l, m, n Adern der mehrpoligen Verbindung (Anschlussbuchse bzw. Anschlussstecker)

## Patentansprüche

1. Scheinwerfer (4) für ein Fahrrad (1) mit oder ohne zusätzlichen elektrischen Antrieb (2), wobei der Scheinwerfer (4) mit einem Dynamo (3) elektrisch verbindbar ist und folgende Bauteile enthält:
- ein Gehäuse (5) mit mindestens einer Lichtaustrittsöffnung (6),
- eine Mehrzahl von Leuchtdioden (7, 8, 9, 10, 11),
- einen in das Gehäuse integrierten Pufferakkumulator (12),
- mindestens eine elektronische Steuerung (13) zur manuellen situationsgerechten Ansteuerung der Leuchtdioden (7, 8, 9, 10, 11),
- mindestens eine mehrpolige (i, j, k, 1, m, n) Verbindung von innen nach außen,
**gekennzeichnet dadurch, dass** die mehrpolige (i, j, k, l, m, n) Verbindung so mit der elektronischen Steuerung (13) verbunden ist, dass verschiedene Funktionen der Leuchtdioden (7, 8, 9, 10, 11) über ein angeschlossenes Funktionsanschlusskabel (20) mit Schaltelement (22) angesteuert werden können und dadurch auch eine automatische situationsgerechte Ansteuerung der Leuchtdioden (7, 8, 9, 10, 11) möglich ist.

2. Scheinwerfer (4) nach Anspruch 1, **dadurch gekennzeichnet, dass** der Pufferakkumulator (12) für eine Spannung von mindestens 5,5 V (Volt] ausgelegt ist und eine Kapazität von mindestens 30 mAh [Milliamperestunden] hat.

3. Scheinwerfer (4) nach einem der vorhergehenden Ansprüche, **dadurch gekennzeichnet, dass** mindestens drei Leuchtdioden (7, 8, 9. 10, 11) vorhanden sind, die in mindestens zwei Gruppen separat geschaltet sind, wobei eine Gruppe als Tagfahrlicht und mindestens eine als Hauptlicht schaltbar ist.

4. Scheinwerfer (4) nach einem der vorhergehenden Ansprüche, **dadurch gekennzeichnet, dass** die mehrpolige (i, j, k, 1, m, n) Verbindung als Anschlussbuchse (14) ausgebildet und so über die elektronische Steuerung (13) mit dem Pufferakkumulator (12) verbunden ist, dass eine konstante Spannung für einen Stromversorgungsausgang (15) an der Anschlussbuchse (14) abgenommen werden kann.

5. Scheinwerfer (4) nach einem der vorhergehenden Ansprüche, **dadurch gekennzeichnet, dass** er einen Rücklichtanschluss (17) aufweist, dessen Stromverbrauch gemessen wird, wobei der Verbrauch in einem vorgegebenen Bereich eine erste Kontrollleuchte (18), vorzugsweise eine Leuchtdiode, am Scheinwerfer (4) ansteuert.

6. Scheinwerfer (4) nach einem der vorhergehenden Ansprüche, **dadurch gekennzeichnet, dass** der Scheinwerfer (4) mindestens einen Helligkeitssensor (30) enthält, der je nach Umgebungshelligkeit verschiedene Leuchtdioden (7, 8, 9, 10, 11) oder Gruppen von Leuchtdioden (7, 8, 9, 10, 11) über die elektronische Steuerung (13) ansteuert und/oder deren Helligkeit entsprechend der Umgebungshelligkeit anpasst.

7. Scheinwerfer (4) nach einem der vorhergehenden Ansprüche, **dadurch gekennzeichnet, dass** mindestens eine der Leuchtdioden (7, 8, 9, 10, 11) oder eine der Gruppen als Standlicht schaltbar sind, wenn keine Stromversorgung durch einen Dynamo (3) erfolgt.

8. Scheinwerfer (4) nach einem der vorhergehenden Ansprüche, **dadurch gekennzeichnet, dass** mindestens eine der Leuchtdioden (7, 8, 9, 10, 11) oder Gruppen von Leuchtdioden (7, 8, 9, 10, 11) in zwei unterschiedlichen Helligkeitsstufen betreibbar ist, zwischen denen mittels des an die mehrpolige (i, j, k, l, m, n) Verbindung anschließbaren Schaltelementes (22) umgeschaltet werden kann.

9. Scheinwerfer (4) nach einem der vorhergehenden Ansprüche, **dadurch gekennzeichnet, dass** mindestens eine Leuchtdiode (8, 9) als seitlicher Kurvenstrahler ausgebildet ist, die manuell oder automatisch zu einem Hauptlicht (7) zuschaltbar ist.

10. Scheinwerfer (4) nach einem der vorhergehenden Ansprüche, **dadurch gekennzeichnet, dass** die mehrpolige (i, j, k, 1, m, n) Verbindung als Anschlussbuchse (14) ausgebildet ist, an die ein Klinkenstecker (21), insbesondere ein 4-fach Stereo-Klinkenstecker, anschließbar ist, wobei zwei Pole (i, j) für eine Stromversorgungslettung (29), insbesondere eine Standard- USB-Stromversorgung, und weitere Pole (k, l, m, n) für eine oder mehrere Datenleitungen bzw. Signalleitungen mit der elektronischen Steuerung (13) verbunden sind.

11. Scheinwerfer (4) nach einem der vorhergehenden Ansprüche, **dadurch gekennzeichnet, dass** die elektronische Schaltung (13) so ausgeführt ist, dass das Anliegen einer externen Stromquelle an der mehrpoligen (i, j, k, l, m, n) Verbindung erkannt wird und eine Umschaltung auf externe Stromversorgung erfolgt.

12. Scheinwerfer (4) nach einem der vorhergehenden Ansprüche, dadurch gekennzeichet, dass ein manuell bedienbarer Schalter (16) außen am Gehäuse (5) angebracht ist und einen mit dem Schalter (6) bewegbaren Permanentmagneten (31) aufweist, der je nach seiner Position unterschiedlich auf mindestens einen mit der elektronischen Steuerung (13) verbundenen Magnetsensor (32) einwirkt.

13. Funktionsanschlusskabel (20) für einen Scheinwerfer (4) nach einem der vorhergehenden Ansprüche, wobei das Funktionsanschlusskabel (20) an einem Ende einen an eine Anschlussbuchse (14) des Scheinwerfers (4) angepassten mehrpoligen Stecker (21) und am anderen Ende eine Halterung (23), insbesondere zur Befestigung an einem Fahrradlenker (34), mit einer Stromversorgungsbuchse (24), insbesondere nach USB-Standard, und mindestens einem Schaltelement (22) zum Schalten von Funktionen der elektronischen Steuerung (13) aufweist.

14. Funktionsanschlusskabel (20) nach Anspruch 13, wobei die Halterung (23) zusätzlich mindestens eine Signalleuchte (25, 26), vorzugsweise eine Leuchtdiode, aufweist, insbesondere zum Anzeigen der Ladebereitschaft der Stromversorgungsbuchse (24) oder bestimmter Leuchtzustände des Scheinwerfers (4).

15. Verfahren zum Betrieb eines Scheinwerfers (4) eines Zweirades (1) nach einem der Ansprüche 1 bis 12, **dadurch gekennzeichnet, dass** verschiedene Leuchtzustände automatisch in Abhängigkeit von Umgebungshelligkeit, Geschwindigkeit des Zweirades (1), Ladezustand des Pufferakkumulators (12) und/oder anderen Parametern eingestellt werden, wobei Eingriffe über ein Schaltelement (22) an einem Funktionsanschlusskabel (20) vorrangig geschaltet werden und parallel ein Ladestrom oder Versorgungsstrom für ein elektrisches Zusatzgerät (35), insbesondere ein Smartphone oder Navigationsgerät, abzweigbar sind.

## Claims

1. Headlamp (4) for a bicycle (1) with or without additional electric drive (2), wherein the headlamp (4) can be electrically connected to a dynamo (3) and includes the following components:
- a housing (5) with at least one light outlet opening (6),
- a plurality of light-emitting diodes (7, 8, 9, 10, 11),
- a buffer battery (12) integrated into the housing,
- at least one electronic controller (13) for manual and/or automatic control of the light-emitting diodes (7, 8, 9, 10, 11) as required by the situation,
- at least one multipolar (i, j, k, l, m, n) connection from inside to outside,
**characterized in that** the multipolar (i, j, k, l, m, n) connection is connected to the electronic controller (13) so that different functions of the light-emitting diodes (7, 8, 9, 10, 11) can be activated by means of a connected function connection cable (20) with switching element (22), and control of the light-emitting diodes (7, 8, 9.10, 11) as required by the situation is made possible thereby.

2. Headlamp (4) according to claim 1, **characterized in that** the buffer battery (12) is designed for a voltage of at least 5.5 V [volts] and has a capacitance of at least 30 mAh [milliamperes per hour].

3. Headlamp (4) according to one of the preceding claims, **characterized in that** there are at least three light-emitting diodes (7, 8, 9, 10, 11) which are connected separately in at least two groups, wherein one group can be connected as a daytime running light and at least one as a main light.

4. Headlamp (4) according to one of the preceding claims, **characterized in that** the multipolar (i, j, k, l, m, n) connection is designed as a connector socket (14) and is connected by means of the electronic controller (13) to the buffer battery (12) so that a constant voltage for a current supply output (15) can be taken off at the connector socket (14).

5. Headlamp (4) according to one of the preceding claims, **characterized in that** it has a rear light connector (17), the current consumption of which is measured, wherein the consumption in a predetermined range controls a first indicator light (18), preferably a light-emitting diode, on the headlamp (4).

6. Headlamp (4) according to one of the preceding claims, **characterized in that** the headlamp (4) includes at least one brightness sensor (30) which, depending on ambient brightness, activates different light-emitting diodes (7, 8, 9, 10, 11) or groups of light-emitting diodes (7, 8, 9, 10, 11) by means of the electronic controller (13) and/or adjusts the brightness thereof according to the ambient brightness.

7. Headlamp (4) according to one of the preceding claims, **characterized in that** at least one of the light-emitting diodes (7, 8, 9, 10, 11) or one of the groups can be switched to a parking light if no current supply takes place by a dynamo (3).

8. Headlamp (4) according to one of the preceding claims, **characterized in that** at least one of the light-emitting diodes (7, 8, 9, 10, 11) or groups of light-emitting diodes (7, 8, 9, 10, 11) can be operated at two different brightness levels between which it is possible to switch by means of a switching element (22) which can be connected to the multipolar connection (i, j, k, l, m, n).

9. Headlamp (4) according to one of the preceding claims, **characterized in that** at least one light-emitting diode (8, 9) is formed as a lateral-dipped beam light which can be switched manually or automatically to a main beam (7).

10. Headlamp (4) according to one of the preceding claims, **characterized in that** the multipolar (i, j, k, l, m, n) connection is formed as a connector socket (14), to which a jack plug (21), in particular a 4-way stereo jack plug, can be connected, wherein two poles (i, j) for a power supply line (29), in particular a standard USB power supply, and further poles (k, l, m, n) for one or more data lines or signal lines are connected to the electronic controller (13).

11. Headlamp (4) according to one of the preceding claims, **characterized in that** the electronic circuit (13) is designed so that the application of an external current source to the multipolar (i, j, k, l, m, n) connection is recognized and a switchover to external power supply takes place.

12. Headlamp (4) according to one of the preceding claims, **characterized in that** a manually operable switch (16) is mounted externally on the housing (5) and has a permanent magnet (31) which is movable with the switch (6) and, depending upon its position, acts differently on at least one magnetic sensor (32) connected to the electronic controller (13).

13. Function connection cable (20) for a headlamp (4) according to one of the preceding claims, wherein the function connection cable (20) has on one end a multipolar connector (21) adapted to a connector socket (14) of the headlamp (4) and at the other end a mounting (23), in particular for fastening to a bicycle handlebar (34), with a power supply socket (24), in particular according to the USB standard, and at least one switching element (22) for switching functions of the electronic controller (13).

14. Function connection cable (20) according to claim 13, wherein the mounting (23) additionally has at least one signal lamp (25, 26), preferably a light-emitting diode, in particular for indicating the readiness for charging of the power supply socket (24) or specific illumination states of the headlamp (4).

15. Method for operating a headlamp (4) of a bicycle (1) according to one of claims 1 to 12, **characterized in that** different illumination states are set automatically depending upon ambient brightness, speed of the bicycle (1), state of charge of the buffer battery (12) and/or other parameters, wherein interventions by means of a switching element (22) are switched primarily to a function connection cable (20) and simultaneously a charging current or supply current can be diverted for an electric additional device (35), in particular a smartphone or navigation device.

## Revendications

1. Phare (4) pour un vélo (1) avec ou sans entraînement électrique supplémentaire (2), le phare (4) pouvant être relié électriquement à une dynamo (3) et contenant les composants suivants :
- un boîtier (5) avec au moins une ouverture de sortie de lumière (6),
- une pluralité de diodes électroluminescentes (7, 8, 9, 10, 11),
- un accumulateur tampon (12) intégré dans le boîtier ;
- au moins une commande électronique (13) pour l'actionnement manuel des diodes électroluminescentes (7, 8, 9, 10, 11) en fonction des situations,
- au moins une connexion multipolaire (i, j, k, l, m, n) de l'intérieur vers l'extérieur,
**caractérisé en ce que**
- la connexion multipolaire (i, j, k, l, m, n) est reliée de telle façon à la commande électronique (13), que différentes fonctions des diodes électroluminescentes (7, 8, 9, 10, 11) peuvent être activées par le biais d'un câble de raccordement de fonctions (20) raccordé, avec élément de commutation (22), permettant ainsi également un actionnement automatique des diodes électroluminescentes (7, 8, 9, 10, 11) en fonction des situations.

2. Phare (4) selon la revendication 1, **caractérisé en ce que** l'accumulateur tampon (12) est conçu pour une tension d'au moins 5,5 V [volts] et présente une capacité d'au moins 30 mAh [heures-milliampères].

3. Phare (4) selon l'une quelconque des revendications précédentes, **caractérisé en ce qu'**il est prévu au moins trois diodes électroluminescentes (7, 8, 9, 10, 11) raccordées séparément dans au moins deux groupes, un groupe étant commutable en tant que feux de jour et au moins un en tant que feu principal.

4. Phare (4) selon l'une des revendications précédentes, **caractérisé en ce que** la connexion multipolaire (i, j, k, l, m, n) est conçue comme une douille de raccordement (14) et reliée de telle façon à l'accumulateur tampon (12) par le biais de la commande électronique (13), qu'une tension constante pour une sortie d'alimentation en courant (15) peut être prélevée sur la douille de raccordement (14).

5. Phare (4) selon l'une des revendications précédentes, **caractérisé en ce qu'**il présente un connecteur de feu arrière (17) dont la consommation électrique est mesurée, la consommation dans une plage prédéfinie activant un premier voyant lumineux (18), de préférence une diode électroluminescente, sur le phare (4).

6. Phare (4) selon l'une des revendications précédentes, **caractérisé en ce que caractérisé en ce que** le phare (4) comprend au moins un capteur de luminosité (30) activant différentes diodes électroluminescentes (7, 8, 9, 10, 11) ou différents groupes de diodes électroluminescentes (7, 8, 9, 10, 11) par le biais de la commande électronique (13) en fonction de la luminosité ambiante, et/ou adaptant la luminosité de ceux-ci en fonction de la luminosité ambiante.

7. Phare (4) selon l'une des revendications précédentes, **caractérisé en ce qu'**au moins l'une des diodes électroluminescentes (7, 8, 9, 10, 11) ou l'un des groupes est commutable en tant que feu de position, lorsqu'aucune alimentation électrique n'est assurée par une dynamo (3).

8. Phare (4) selon l'une des revendications précédentes, **caractérisé en ce qu'**au moins l'une des diodes électroluminescentes (7, 8, 9, 10, 11) ou l'un des groupes de diodes électroluminescentes (7, 8, 9, 10, 11) est utilisable dans deux niveaux de luminosité distincts, un élément de commutation (22) raccordable à la connexion multipolaire (i, j, k, l, m, n) permettant de passer de l'un à l'autre.

9. Phare (4) selon l'une des revendications précédentes, **caractérisé en ce qu'**au moins une diode électroluminescente (8, 9) est conçue comme un projecteur de virage latéral susceptible d'être ajouté manuellement ou automatiquement en plus du feu principal (7).

10. Phare (4) selon l'une des revendications précédentes, **caractérisé en ce que** la connexion multipolaire (i, j, k, l, m, n) est conçue comme une douille de raccordement (14) à laquelle peut être raccordé un jack (21), en particulier un quadruple jack stéréo, deux pôles (i, j) étant reliés à la commande électronique (13) pour une ligne d'alimentation électrique (29), en particulier une alimentation électrique conforme à la norme USB, et d'autres pôles (k, l, m, n) pour une ou plusieurs lignes de données ou lignes de signaux.

11. Phare (4) selon l'une des revendications précédentes, **caractérisé en ce que** la commande électronique (13) est conçue de manière à reconnaître l'application d'une source de courant externe à la connexion multipolaire (i, j, k, l, m, n) et à basculer vers une alimentation électrique externe.

12. Phare (4) selon l'une des revendications précédentes, **caractérisé en ce qu'**un commutateur (16) à commande manuelle est fixé extérieurement sur le boîtier (5) et présente un aimant permanent (31) déplaçable avec le commutateur (6), lequel agit différemment sur au moins un capteur d'aimant (32) relié à la commande électronique (13), en fonction de sa position.

13. Câble de raccordement de fonctions (20) pour un phare (4) selon l'une des revendications précédentes, dans lequel, à une extrémité, le câble de raccordement de fonctions (20) présente un connecteur multipolaire (21) adapté à une douille de raccordement (14) du phare (4), et, à l'autre extrémité, un support (23), en particulier destiné à être fixé à un guidon de vélo (34), avec une douille d'alimentation électrique (24), en particulier conforme à la norme USB, et au moins un élément de commutation (22) pour la commutation de fonctions de la commande électronique (13).

14. Câble de raccordement de fonctions (20) selon la revendication 13, dans lequel le support (23) présente en outre au moins un voyant d'alerte (25, 26), de préférence une diode électroluminescente, en particulier pour indiquer que la douille d'alimentation électrique (24) est prête à être chargée ou pour indiquer des états lumineux donnés du phare (4).

15. Procédé de fonctionnement d'un phare (4) d'un véhicule à deux roues (1) selon l'une des revendications 1 à 9, **caractérisé en ce que** différents états lumineux sont réglés automatiquement en fonction de la luminosité ambiante, de la vitesse du véhicule à deux roues (1), de l'état de charge de l'accumulateur tampon (12) et/ou d'autres paramètres, des interventions étant commutées prioritairement par le biais d'un élément de commutation (22) sur un câble de raccordement de fonctions (20), et un courant de charge ou courant d'alimentation pouvant être dérivé pour un accessoire électrique (35), en particulier un Smartphone ou un appareil de navigation.
